# EUROPEAN PATENT APPLICATION

(11) **EP 1 526 731 A1**
(43) Date of publication of application: **27.04.2005**
(21) Application number: 04024949.2
(22) Date of filing: 20.10.2004
(51) Int. Cl.: H04N 7/088, H04N 5/782, H04N 5/765, H04N 5/445

(54) **Timer recording apparatus and method for VCR having digital tuner**

(30) Priority: 22.10.2003 KR 2003073601
(71) Applicant: Daewoo Electronics Corporation, Seoul (KR)
(72) Inventor: Kim, Min Chul, Mapo-gu Seoul (KR)
(74) Representative: Niederkofler, Oswald A., Dipl.-Phys.

(57) **Abstract**

An apparatus and a method for performing a timer recording of a desired program, which will be broadcasted on a currently-watched channel, through a simple user interface in a Video Cassette Recorder (VCR) system having a digital tuner for receiving cable broadcasts are provided. For this purpose, a program guide menu for the currently-watched broadcast channel is provided to a monitor through the manipulation of a convenient timer button, and the desired program is directly selected from the program guide menu, thus considerably improving the usability of the timer recording.

## Description

The present invention relates to a video cassette recorder system; and more particularly, to a timer recording apparatus and a timer recording method that performs a timer recording of a program of a specific cable broadcast channel in a video cassette recorder system having a digital tuner for receiving digital broadcast signals transmitted through a cable.

As well known, cable broadcasts, which have been greatly popularized in recent years, have many advantages in the maximization of numbers of channels, improvement in quality of video and audio signals and easy transmission of additional service data, compared to general analog broadcasts.

In this case, cable broadcasts employ a transmission method different from that employed in general analog broadcasts. That is, in the cable broadcasts, broadcast signals composed of streams of packets, which have been compression-encoded according to a Moving Picture Experts Group (MPEG) algorithm, are received, and the received broadcast signals are decoded to replay them. In contrast, in the general analog broadcasts, analog broadcast signals are received and then replayed.

Meanwhile, receivers employed in the cable broadcast have a function of setting a timer recording for a desired program on specific channels selected by users through a Graphic User Interface (GUI).

According to a conventional method, when a user requests a GUI through a remote controller to set timer recording, a receiver constructs a channel and program guide menu, in which a plurality of broadcast channels and programs are arranged in time series, by using data on the cable broadcast channels and the programs that were previously received from the broadcast channels and stored, and then displays the channel and program guide menu on a monitor.

Thereafter, the user selects a desired program of a desired broadcast channel while watching the channel and program guide menu displayed on the monitor, and then selects a timer recording mode through the GUI. However, the conventional method has a problem in that a process of using the GUI, such as the channel and program guide menu, is complicated, so that the conventional method is inconvenient to use.

It is, therefore, an object of the present invention to provide an apparatus and a method for performing a timer recording for a desired program which will be broadcasted on a currently-watched channel in a Video Cassette Recorder (VCR) system having a digital tuner, capable of reducing the complexity of a GUI.

In accordance with one aspect of the present invention, there is provided an apparatus for recording a desired program of' a currently-watched channel on a videotape including: a first memory block for storing channel information packet data and program information packet data for all channels; a control block, when a timer recording for the desired program is requested, for retrieving program information packet data of the currently-watched channel from the first memory block to generate a program guide menu and then enabling a user to select the desired program from the program guide menu and to input timer recording information for the desired program; and a second memory block for receiving information on the currently-watched channel, information on the desired program and the timer recording information from the control block, and then storing the received information; wherein the control block checks the timer recording information to thereby record the desired program on the videotape at regular intervals.

In accordance with another aspect of the present invention, there is provided a method for recording a desired program of a currently-watched channel on a videotape including the steps of: checking whether a timer recording for the desired program is requested while watching the currently-watched channel; retrieving program information packet data of the currently-watched channel from previously stored channel information packet data and program information packet data for all channels, thereby generating a program guide menu and then providing the program guide menu to a display unit, when the timer recording is requested; selecting the desired program from the program guide menu and then inputting timer recording information for the desired program; and storing information on the currently-watched channel, information on the desired program and the timer recording information in a memory, and then checking the timer recording information to thereby record the desired program on the videotape at regular intervals.

The above and other objects and features of the present invention will become apparent from the following description of preferred embodiments given in conjunction with the accompanying drawings, in which:
Fig. 1 is a block diagram showing a VCR system having a digital tuner, for performing a timer recording for a program on a cable broadcast is applied, in accordance with a preferred embodiment of the present invention;
Fig. 2 is a flowchart showing a process of setting the timer recording for a desired program, which will be broadcasted on a currently-watched cable broadcast channel, in accordance with the preferred embodiment of the present invention;
Figs. 3A-3C show an example of a program guide menu displayed on a monitor when the timer recording is set for the broadcast program, which will be broadcasted on the currently-watched cable broadcast channel, in accordance with the present invention; and
Figs. 4A-4C show another example of the program guide menu displayed on the monitor when the timer recording is set for the broadcast program, which will be broadcasted on the currently-watched cable broadcast channel, in accordance with the present invention.

Preferred embodiments of the present invention are described in detail with reference to the attached drawings.

The feature of the present invention is that a program guide menu including data on the currently-watched broadcast channel is displayed to a monitor through the manipulation of a convenient timer button (or a set timer button), and then a desired program is directly selected from the program guide menu while a cursor is moved on a plurality of programs of the program guide menu through the manipulation of a next button, resulting in executing a timer recording. With this technical scheme, objects of the present invention can be easily achieved.

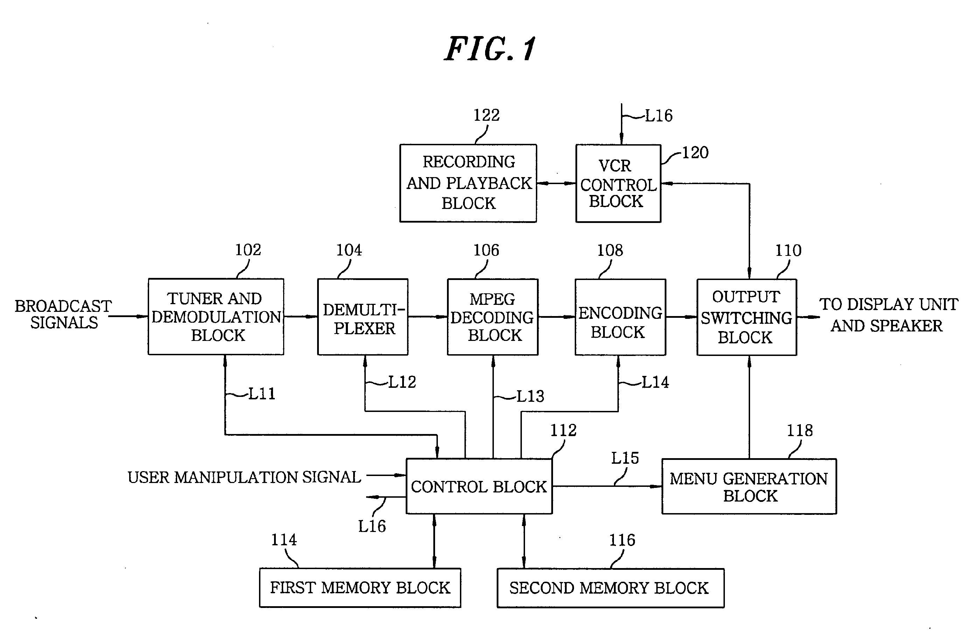

Fig. 1 is a block diagram showing a VCR system having a digital tuner, capable of setting a timer recording for a program on a cable broadcast channel in accordance with the preferred embodiment of the present invention. The VCR system having a built-in digital tuner includes a tuner and demodulation block 102, a demultiplexer 104, a Moving Picture Experts Group (MPEG) decoding block 106, an encoding block 108, an output switching block 110, a control block 112, a first memory block 114, a second memory block 116, a menu generation block 118, a VCR control block 120, and a recording and playback block 122.

Referring to FIG. 1, the tuner and demodulation block 102 extracts additional information (that is, channel information packet data, program information packet data, etc.) from data streams received through a cable (not shown). In detail, the tuner and demodulation block 102 extracts (1) channel information packet data that includes Program Allocation Table (PAT) information composed of N-bit Program Identifier (PID) information indicating the program numbers for each broadcast channel, and (2) program information packet data that includes Program Map Table (PMT) information composed of N-bit PID information indicating audio, video and text of a specific channel, N-bit detailed PID information indicating the detailed information on each program, program information of each channel, and the like. Thereafter, the extracted channel information packet data and the extracted program information packet data are provided to the control block 112 (which will be described later) through a line L11 after passing through processes such as conversion into an intermediate frequency, demodulation, error correction and the like.

At this time, the channel information packet data and the program information packet data provided to the control block 112 through the line L11 are used to tune a specific channel when the specific channel is selected by the user, thus allowing the control block 112 to generate a tuning control signal. Further, the channel information packet data and the program information packet data are used as the contents of a menu screen when the display of a plurality of pieces of channel information and the program information of each channel is requested by the user.

The demultiplexer 104 selects broadcast signals of one cable broadcasting station among demodulated broadcast signals of a plurality of cable broadcasting stations provided from the tuner and the demodulation block 102, on the basis of the tuning control signal provided from the control block 112 through a line L12, and then transmits the selected broadcast signals to the MPEG decoding block 106.

Meanwhile, the MPEG decoding block 106 restores the selected broadcast signals, i.e., compression-coded audio and video signals (the audio and video signals compression-coded in view of time and space correlation), which are provided from the demultiplexer 104, into original signals by adopting decoding techniques, such as variable-length decoding, inverse Discrete Cosine Transform (DCT), inverse quantization, motion compensation and the like, based on a decoding control signal provided by the control block 112 through a line L13. The restored digital video and audio signals are provided to the encoding block 108.

Further, the encoding block 108 converts the digital video and audio signals, provided from the MPEG decoding block 106, into National Television System Committee (NTSC)-or Phase Alternation by Line system (PAL)- type analog video and audio signals on the basis of an encoding control signal provided from the control block 112 through a line L14, and then provides the analog video and audio signals to the output switching block 110.

Meanwhile, the control block 112, which includes, for example, a microprocessor for controlling the entire operation of the system, etc., generates the tuning control signal corresponding to the channel information packet data and the program information packet data when the channel information packet data and the program information packet data are inputted thereto, and then provides the tuning control signal to the tuner and demodulation block 102 and the demultiplexer 104 through the lines L11 and L12, respectively. Further, the control block 112 sequentially stores the channel information packet data and the program information packet data for each channel in a predetermined area of the first memory block 114.

Meanwhile, when the user manipulates the set timer button (convenient timer button) for setting the timer recording while watching a broadcast channel, the control block 112 retrieves the program information packet data for the currently-watched broadcast channel by searching the first memory block 114, and then transmits the retrieved program information packet data to the menu generation block 118 through a line L15 for a GUI for the timer recording.

When the program information packet data for the currently-watched channel is provided to the menu generation block 118 through the line L15, the menu generation block 118 generates the program guide menu data for the currently-watched channel using the provided program information packet data, converts the generated program guide menu data into the NTSC or the PAL analog signals, and then transmits the NTSC or the PAL analog signals to the output switching block 110.

The output switching block 110 transmits the analog video and audio signals provided from the encoding block 108 to a display unit and a speaker, and, in case of recording mode, transmits the analog video and audio signals to the VCR control block 120. Herein, the video signals transmitted to the display unit are displayed in the form of combined screen data, i.e., the combination of the program guide menu data, provided from the menu generation block 118, and the broadcast signals.

Furthermore, when the user selects a desired program for the timer recording from the program guide menu being displayed on the monitor, the control block 112 requests the selection of timer recording information, such as recording intervals (e.g., everyday, Monday to Saturday, every month, etc.) and whether to record character information data.

When the user presses a timer confirmation button after selecting the timer recording information, the control block 112 stores (registers) channel information, program information and the timer recording information in the second memory block 116, thereby completing the timer recording for the desired program of the currently-watched channel. Thereafter, the control block 112 checks the recording intervals stored in the second memory block 116, and then record the desired program on a videotape at the recording intervals.

Meanwhile, when a user manipulation signal, which commands that broadcast signals be recorded on the videotape or the program recorded on the videotape be played, is inputted to the control block 112, the control block 112 generates a recording or a playback control signal, and transmits the recording or the playback control signal to the VCR control block 120 through a line L16.

The VCR control block 120 includes, for example, a microprocessor, etc., to control the entire operation of the VCR. In case of a recording mode, the VCR control block 120 converts broadcast signals (analog video and audio signals) provided from the output switching block 110 into signals recordable on the videotape and then transmits the recordable signals to the recording and playback block 122. In case of a playback mode, the VCR control block 120 transmits playback signals provided from the recording and playback block 122 to the output switching block 110.

The recording and playback block 122 including a head drum, a deck for accommodating the videotape, etc., performs a function of amplifying the recordable broadcast signals, provided from the VCR control block 120, to a certain level and then recording the amplified broadcast signals on the videotape, in the recording mode, and a function of detecting the playback signals replayed from the videotape and then transmitting the playback signals to the VCR control block 120 in the playback mode.

A process for setting the timer recording for the desired program on the currently-watched broadcast channel is described using the VCR system described above in accordance with the present invention.

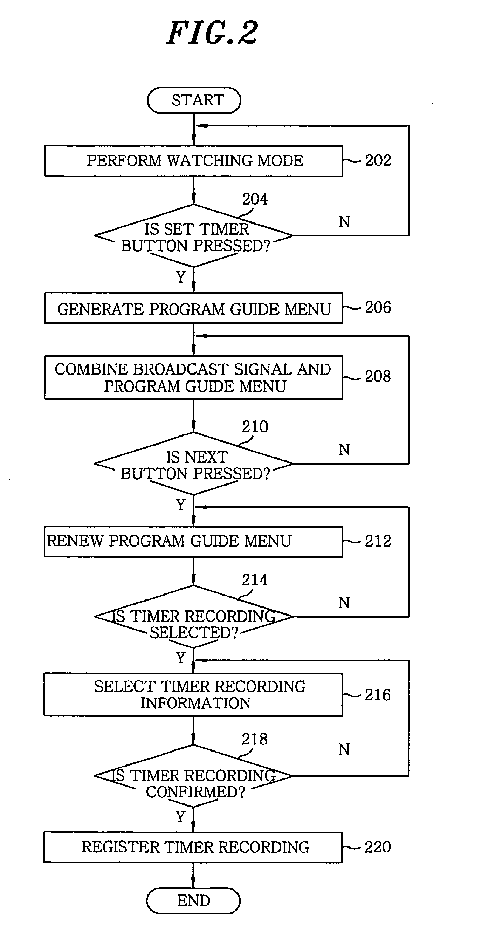

Fig. 2 is a flowchart showing a process for setting the timer recording for the desired program, which will be broadcasted on the currently-watched broadcast channel, in accordance with another embodiment of the present invention.

Referring to Fig. 2, while performing a watching mode, i.e., while the broadcast signals of the selected channel are displayed through the tuning, the MPEG decoding and the encoding steps (step 202), the control block 112 checks whether the set timer button (convenient timer button) is pressed (step 204).

If the set timer button is inputted, the control block 112 retrieves the program information packet data of the currently-watched broadcast channel from the first memory block 114 and then transmits the retrieved program information packet data to the menu generation block 118 through the line L15. Thereafter, the menu generation block 118 generates the program guide menu data by using the program information packet data provided through the line L15, and then converts the program guide menu data into the NTSC or the PAL analog signals, and then transmits the NTSC or the PAL analog signals to the output switching block 110 (step 206) .

As a result, the output switching block 110 combines the broadcast signals provided from the encoding block 108 with the program guide menu data, to thereby generate the combined screen data, and then transmits the combined screen data to the display unit (step 208). Thus, the user can watch the program guide menu for the currently-watched broadcast channel through the monitor.

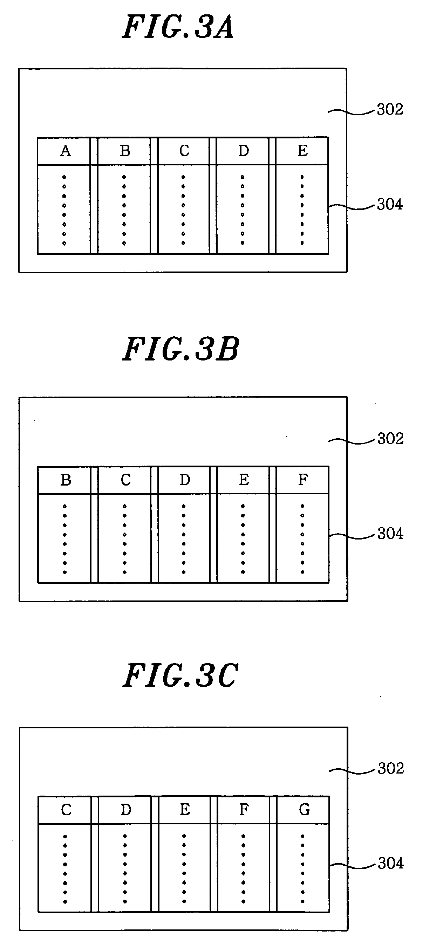

Herein, the user can select the programs of the currently-watched channel which are arranged in time series, through the manipulation of a next button disposed on the panel of a remote controller. Whenever the next button is pressed, information on the earliest-broadcasted program is removed from the program guide menu, and at the same time, information on a program following the latest-broadcasted program is added to the program guide menu. For example, as shown in Fig. 3A, in case the program guide menu displays information on programs A, B, C, D and E, when the user presses the next button once, information on the earliest-broadcasted program A is removed from the program guide menu and information on a program F following the latest-broadcasted program E is newly added to the program guide menu as shown in Fig. 3B. Thereafter, when the user presses the next button once more, information on the earliest-broadcasted program B at the present time is removed from the program guide menu and information on a program G following the latest-broadcasted program F is newly added to the program guide menu as shown in Fig. 3C. Thus, it can be called as a time series scroll method. Herein, the reference numerals 302 and 304 indicate the monitor and the program guide menu, respectively. Information included in the program guide menu may be, e.g., a program title, a broadcast date, a broadcast starting time, a broadcast ending time.

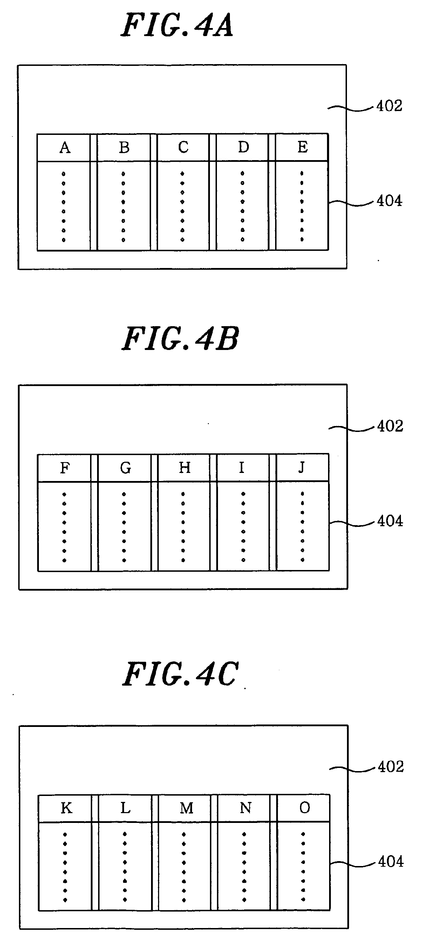

Furthermore, unlike the above-described method, several pieces of information on the following programs can be added to the program guide menu at once by pressing the next button once. For example, in case the program guide menu displays information on programs A, B, C, D and E as shown in Fig. 4A, when the user presses the next button once, information on programs F, G, H, I and J following the latest-broadcasted program E is displayed as shown in Fig. 4B. Thereafter, when the user presses the next button once more, information on programs K, L, M, N and O following the latest-broadcasted program J at the present time is displayed as shown in Fig. 4C. Herein, the reference numerals 402 and 404 indicate the monitor and the program guide menu, respectively.

That is, the control block 112 checks whether the next button is pressed (step 210). Whenever the next button is pressed, the control block 112 renews the program guide menu data for the currently-watched broadcast channel through the above-described methods, and then provides the renewed program guide menu data to the display unit (step 212).

Thereafter, the control block 112 checks whether the user selects a desired program for the timer recording from the program guide menu being displayed on the monitor (step 214). If the user selects the desired program for the timer recording, the control block 112 requests the selection of the timer recording information such as the recording intervals (e.g., everyday, Monday to Saturday, weekend, every month, etc.) and whether to record character information data (step 216).

When the user selects the timer recording information and presses the timer confirmation button (step 218), the control block 112 stores (registers) the channel information, the program information and the timer recording information in the second memory block 116, to thereby complete the setting of the timer recording (step 220).

Thereafter, the control block 112 checks the recording intervals stored in the second memory block 116, and then record the desired program on the videotape at the recording intervals.

As described above, the present invention provides the program guide menu for the currently-watched broadcast channel to the monitor by manipulating the convenient timer button, and then the timer recording can be set for the desired program by simply manipulating the next button for selecting the desired program, thereby considerably improving the usability of the timer recording.

While the invention has been shown and described with respect to the preferred embodiments, it will be understood by those skilled in the art that various changes and modifications may be made without departing from the scope of the invention as defined in the following claims.

## Claims

1. An apparatus for recording a desired program of a currently-watched channel on a videotape comprising:
a first memory block for storing channel information packet data and program information packet data for all channels;
a control block, when a timer recording for the desired program is requested, for retrieving program information packet data of the currently-watched channel from the first memory block to generate a program guide menu and then enabling a user to select the desired program from the program guide menu and to input timer recording information for the desired program; and
a second memory block for receiving information on the currently-watched channel, information on the desired program and the timer recording information from the control block, and then storing the received information;
wherein the control block checks the timer recording information to thereby record the desired program on the videotape at regular intervals.

2. The apparatus of claim 1, wherein the timer recording information is information on recording intervals and whether to record character information data.

3. The device of claim 1, wherein the desired program is selected while a cursor is moved on a plurality of programs of the program guide menu by pressing a next button.

4. A method for recording a desired program of a currently-watched channel on a videotape comprising the steps of:
checking whether a timer recording for the desired program is requested while watching the currently-watched channel;
retrieving program information packet data of the currently-watched channel from previously stored channel information packet data and program information packet data for all channels, thereby generating a program guide menu and then providing the program guide menu to a display unit, when the timer recording is requested;
selecting the desired program from the program guide menu and then inputting timer recording information for the desired program; and
storing information on the currently-watched channel, information on the desired program and the timer recording information in a memory, and then checking the timer recording information to thereby record the desired program on the videotape at regular intervals.

5. The method of claim 4, wherein the desired program is selected while a cursor is moved on a plurality of programs of the program guide menu by pressing a next button, wherein the program guide menu is renewed in such a way that the earliest-broadcasted program information among the program guide menu is removed and program information following the latest-broadcasted program information is added to the program guide menu whenever the next button is pressed.

6. The method of claim 4, wherein the desired program is selected while a cursor is moved on a plurality of programs of the program guide menu by pressing a next button, wherein the program guide menu is renewed in such a way that the earliest-broadcasted several pieces of program information among the program guide menu are removed and several pieces of program information following the latest-broadcasted program information are added to the program guide menu whenever the next button is pressed.

7. The method of any of claims 4 to 6, wherein the timer recording information includes information on recording intervals and whether to record character information data.
